# EUROPÄISCHE PATENTSCHRIFT

(11) **EP 0 860 332 B1**
(45) Veröffentlichungstag und Bekanntmachung des Hinweises auf die Patenterteilung: **15.11.2000**
(21) Anmeldenummer: 98101621.5
(22) Anmeldetag: 30.01.1998
(51) Int. Cl.: B60R 21/16, B60R 21/26

(54) **Fahrzeuginsassen-Rückhaltesystem**
Vehicle occupant restraint system
Système de retenue d'un occupant dans un véhicule

(30) Priorität: 25.02.1997 DE 29703360 U
(43) Veröffentlichungstag der Anmeldung: 26.08.1998
(73) Patentinhaber: TRW Occupant Restraint Systems GmbH & Co. KG, 73551 Alfdorf (DE)
(72) Erfinder: Beisswenger, Roland, 73527 Schwäbisch Gmünd (DE)
(74) Vertreter: Degwert, Hartmut, Dipl.-Phys.

(56) Entgegenhaltungen:
- WO-A-93/15907
- US-A- 3 853 334
- US-A- 3 868 126

## Beschreibung

Die Erfindung bezieht sich auf ein Fahrzeuginsassen-Rückhaltesystem mit einem Gassack und einem Gasgenerator zum Befüllen des Gassacks.

Solche Fahrzeuginsassen-Rückhaltesysteme sind bekannt und, siehe z.b. US 3 853 334, werden seit mehreren Jahren in wachsendem Umfang in Serienfahrzeuge eingebaut. Sensoren erkennen hier eine außergewöhnliche Fahrsituation, wie z.B. einen Aufprall oder einen bevorstehenden Überschlag, und verursachen die Aktivierung des Gasgenerators, der daraufhin den Gassack aufbläst. Aufblaszeit und Druckhaltedauer des Gassacks müssen dabei so bemessen sein, daß der Gassack beim Aufprall des Fahrzeuginsassen vollständig befüllt ist. Bei einem Frontalaufprall ist hierzu eine Druckhaltedauer im Bereich von 100 ms im allgemeinen ausreichend. Bei einem Überschlag jedoch sollte die Druckhaltedauer im Bereich einiger Sekunden liegen, da ein Überschlag bis zum Stillstand des Fahrzeugs mehrere Sekunden dauern kann. Um die Druckhaltedauer eines Gassacks in den Sekundenbereich auszudehnen, wird zur Herstellung des Gassacks beschichtetes Gewebe mit geringer Gasdurchlässigkeit verwendet. Die Verwendung eines einstückig gewebten Gassacks verlängert die Druckhaltedauer ebenfalls. Während die Herstellung eines einstückig gewebten Gassacks unter anderem hohe Herstellungskosten mit sich bringt, besteht bei Verwendung beschichteten Gewebes über die Lebensdauer des Fahrzeugs die Gefahr, daß sich das beschichtete Gewebe im zusammengefalteten Zustand verklebt.

Durch die Erfindung soll der Gassack während des Aufblasvorgangs dynamisch abgedichtet und die Druckhaltedauer des Gassacks wesentlich verlängert werden, ohne die beim Stand der Technik auftretenden Nachteile in Kauf nehmen zu müssen.

Diese Vorteile werden mit einem Fahrzeuginsassen-Rückhaltesystem mit einem Gassack und einem Gasgenerator zum Befüllen des Gassacks erzielt, bei dem die vom Gasgenerator erzeugten Druckgase mit einem Dichtmittel versehen sind und das Dichtmittel während des Aufblasvorgangs des Gassacks auf dessen Innenseite verteilt wird. Die dynamische Abdichtung des Gassacks erst während des Aufblasvorgangs ermöglicht es, unbeschichtetes Gassackmaterial, wie z.B. ein unbeschichtetes Gewebe, zu verwenden. Hierdurch ist im gefalteten Zustand ein geringerer Platzbedarf erforderlich als bei bereits beschichtetem Material. Beim Stand der Technik auftretende Probleme mit beschichtetem Gassackmaterial bezüglich des Verklebens des Gassackmaterials in gefaltetem Zustand werden durch die Erfindung zuverlässig vermieden. Der Herstellungsprozeß des Gassacks ist insgesamt weniger kritisch, da weder auf Beschädigung einer Beschichtung noch auf besonders gasdichte Ausführung von Nähten geachtet werden muß. Das Dichtmittel kann beispielsweise in den Gasbehälter eines Hybridgasgenerators integriert sein.

Gemäß einer weiterbildenden Maßnahme ist vorgesehen, daß das Fahrzeuginsassen-Rückhaltesystem weiterhin einen Dichtmittel enthaltenden Speicherbehälter aufweist. Der Speicherbehälter ist durch Druckgase beaufschlagbar, die vom Gasgenerator erzeugt werden. Eine Austrittsöffnung des Speicherbehälters steht in Strömungsverbindung mit dem Gassack, so daß das Dichtmittel während des Aufblasvorgangs des Gassacks vom Speicherbehälter zum Gassack befördert und auf dessen Innenseite verteilt wird. Das Dichtmittel kann im Dichtmittelspeicher in flüssigem oder pulverförmigem Zustand vorliegen.

In Weiterbildung der Erfindung ist der Speicherbehälter in einer Verbindungsleitung zwischen Gasgenerator und Gassack angeordnet. Eine solche Anordnung ist durch die räumliche Trennung von Gasgenerator, Speicherbehälter und Gassack besonders leicht an beengte Einbauverhältnisse anpaßbar.

Gemäß einer anderen Ausführungsform der Erfindung ist der Speicherbehälter im Gassack angeordnet. Kurze Wege vom Speicherbehälter zum Gassack erfordern nur geringen Bauaufwand und vermeiden Leitungsverluste bei der Beförderung des Dichtmittels.

Bei einer vorteilhaften Weiterbildung der Erfindung ist an einer Einmündungsöffnung in den Gassack, an der das vom Speicherbehälter zum Gassack beförderte Dichtmittel in dem Gassack eintritt, eine mit mehreren Abströmöffnungen versehene Verteilerdüse vorgesehen. Eine Verteilerdüse ermöglicht eine gleichmäßige Verteilung des Dichtmittels auf der Innenseite des Gassacks, so daß zur Abdichtung des Gassacks weniger Dichtmittel als bei ungleichmäßiger Verteilung erforderlich ist.

Bei einer anderen bevorzugten Ausführungsform der Erfindung sind Gasgenerator und Speicherbehälter in einem gemeinsamen Gehäuse integriert. Solch eine kompakte Bauweise des Fahrzeuginsassen-Rückhaltesystems spart Herstellungskosten und verringert Verluste bei der Druckgas- und Dichtmittelbeförderung. Die Treibladung des Gasgenerators und der Speicherbehälter können somit klein dimensioniert werden.

Vorzugsweise ist in dem Pfad der vom Gasgenerator erzeugten und den Speicherbehälter beaufschlagenden Druckgase zwischen Gasgenerator und Speicherbehälter eine Berstmembran angeordnet. Dies ermöglicht es, den Speicherbehälter gegen den Gassack abzuschließen, ohne die Funktion des Fahrzeuginsassen-Rückhaltesystems bei einem Fahrzeugaufprall zu beeinträchtigen. Über die Lebensdauer des Fahrzeugs können somit Veränderungen der Treibladung und des Dichtmittels durch gegenseitigen Kontakt ausgeschlossen werden. Besonders bei Verwendung flüssigen Dichtmittels ist die Verwendung einer Berstmembran vorteilhaft.

Ebenfalls vorteilhaft ist es, die Strömungsverbindung vom Speicherbehälter zum Gassack im Ruhezustand durch eine Berstmembran zu unterbrechen. Ein direkter Kontakt von Dichtmittel und Gassackmaterial und sich daraus ergebende Veränderungen von Dichtmittel oder Gassackmaterial können somit vermieden werden.

Um einen direkten Kontakt zwischen Treibladung und Dichtmittel im Ruhezustand zu vermeiden, kann es auch vorteilhaft sein, in dem Pfad der vom Gasgenerator erzeugten und den Speicherbehälter beaufschlagenden Druckgase zwischen Gasgenerator und Speicherbehälter eine mit einem Ventil versehene Trennwand anzuordnen.

Schließlich kann es ebenso vorteilhaft sein, auch in der Strömungsverbindung vom Speicherbehälter zum Gassack eine mit einem Ventil versehene Trennwand anzuordnen.

Bevorzugte Ausführungsformen der Erfindung sind in der Zeichnung dargestellt und werden nachfolgend beschrieben, wobei gleiche Bauteile der verschiedenen Ausführungsformen mit den gleichen Referenznummern bezeichnet sind. Hierbei zeigen:
Fig. 1 eine schematische Darstellung einer ersten Ausführungsform des erfindungsgemäßen Fahrzeuginsassen-Rückhaltesystems,
Fig. 2 eine schematische Darstellung einer zweiten Ausführungsform des erfindungsgemäßen Fahrzeuginsassen-Rückhaltesystems, und
Fig. 3 eine schematische Schnittansicht einer dritten Ausführungsform der Erfindung.

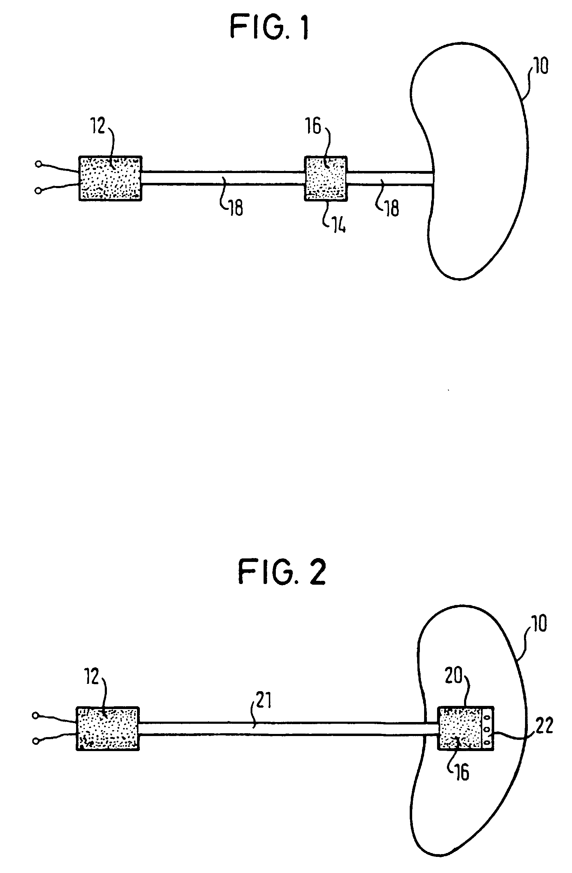

Fig. 1 zeigt ein erfindungsgemäßes Fahrzeuginsassen-Rückhaltesystem, bei dem ein Gasgenerator 12 nach seiner Aktivierung einen Gassack 10 befüllt. Im Sinne einer deutlicheren Darstellung ist der Gassack 10 aufgeblasen dargestellt. In einer Verbindungsleitung 18 zwischen Gasgenerator 12 und Gassack 10 ist ein Speicherbehälter 14 angeordnet, der Dichtmittel 16 enthält. Zwischen einer Austrittsöffnung des Speicherbehälters 14 und dem Gassack 10 besteht über die Verbindungsleitung 18 eine Strömungsverbindung. Bei Aktivierung des Gasgenerators 12 beaufschlagen von dessen Treibladung erzeugte Druckgase den Speicherbehälter 14 und das darin enthaltene Dichtmittel 16. Das Dichtmittel 16 wird durch die Druckgase mitgerissen und von der Austrittsöffnung des Speicherbehälters 14 durch die Verbindungsleitung 18 zum Gassack 10 befördert. Das pulverförmige Dichtmittel 16 tritt mit den Druckgasen vermischt in den Gassack 10 ein, der sich vor Aktivierung des Gasgenerators 12 im zusammengefalteten Zustand befindet. Während des Entfaitungsvorgangs gelangt mit Dichtmittel 16 vermischtes Druckgas an die Innenseite des Gassacks 10, wobei sich das vom Druckgas mitgeführte Dichtmittel 16 wenigstens teilweise hierauf niederschlägt und das Gassackmaterial abdichtet. Eine Beschichtung und Abdichtung der gesamten Innenseite des Gassacks 10 wird auch dadurch sichergestellt, daß durch noch eventuell unbeschichtete Abschnitte des Gassackmaterials in die Atmosphäre entweichendes Druckgas mit Dichtmittel 16 vermischt ist. Durch das Ausströmen von mit Dichtmittel 16 vermischtem Druckgas durch noch unbeschichtete Abschnitte des Gassackmaterials schlägt sich auch auf diesen Abschnitten Dichtmittel 16 nieder, so daß eine Selbstabdichtungsfunktion des Gassacks gegeben ist.

Bei der in der Fig. 2 dargestellten Ausführungsform der Erfindung ist ein Speicherbehälter 20 im Gassack 10 selbst angeordnet. Die Austrittsöffnung des Speicherbehälters 20 steht über eine Verteilerdüse 22 in Strömungsverbindung mit dem Gassack 10. Bei Aktivierung des Gasgenerators 12 wird der Speicherbehälter 20 über die Verbindungsleitung 21 mit Druckgas beaufschlagt, und das in dem Speicherbehälter 20 enthaltene Dichtmittel 16 wird in die Verteilerdüse 22 befördert und durch diese, entsprechend der Lage ihrer Austrittsöffnungen, während des Entfaltungsvorgangs des Gassacks 10 auf dessen Innenseite verteilt. Durch entsprechende Anordnung der Ausströmöffnungen der Verteilerdüse 22 kann eine gleichmäßige Verteilung des Dichtmittels 16 auf der Innenseite des Gassacks 10 erreicht werden, was insbesondere dann vorteilhaft ist, wenn der Gassack 10, wie in der Fig. 2 dargestellt, eine ausgeprägte Kissenform aufweist.

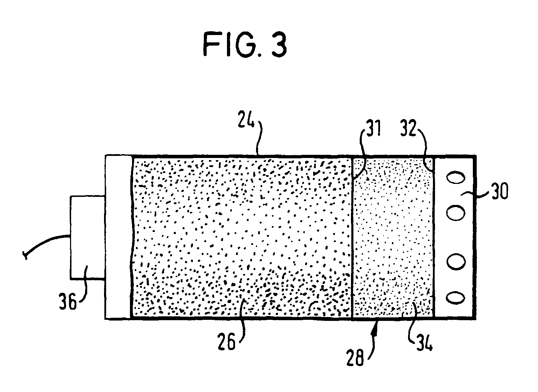

Fig. 3 zeigt eine dritte Ausführungsform des erfindungsgemäßen Fahrzeuginsassen-Rückhaltesystems, wobei der besseren Übersichtlichkeit halber auf eine Darstellung des Gassacks verzichtet wurde. Um eine kompakte Bauform zu erreichen, wurden hier ein Gasgenerator 26 und ein Speicherbehälter 28 in einem gemeinsamen Gehäuse 24 integriert. Ebenfalls in dem Gehäuse 24 integriert ist eine mit mehreren Abströmöffnungen versehene Verteilerdüse 30. Das in dem Speicherbehälter 28 enthaltene Dichtmittel 34 liegt bei dieser Ausführungsform in flüssigem Zustand vor. Um ein Auslaufen des Dichtmittels 34 in die Verteilerdüse 30 und einen Kontakt des Dichtmittels 34 mit der Treibladung des Gasgenerators 26 zu vermeiden, ist der Speicherbehälter 28 zum Gasgenerator 26 hin mit einer Berstmembran 31 und zur Verteilerdüse 30 hin mit einer Berstmembran 32 verschlossen. Zur Aktivierung des Gasgenerators 26 wird dessen Treibladung über einen elektrischen Zünder 36 gezündet. Die dabei erzeugten Druckgase beaufschlagen zunächst die Berstmembran 31, und nachdem diese durch den steigenden Druck innerhalb des Gasgenerators 26 geborsten ist, direkt das Dichtmittel 34. In der Folge wird auch die zweite Berstmembran 32, die den Speicherbehälter 28 von der Verteilerdüse 30 abtrennt, bersten, worauf das Dichtmittel 34 in die Verteilerdüse 30 eintritt. Da vom Gasgenerator 26 weiterhin Druckgase erzeugt werden, strömt das Dichtmittel 34 zusammen mit den vom Gasgenerator 26 erzeugten Druckgasen durch die Ausströmöffnungen der Verteilerdüse 30 in den Gassack ein. Während der Entfaltung des Gassacks verteilt sich dann das Dichtmittel 34 auf der Innenseite des Gassacks und dichtet diesen ab.

## Patentansprüche

1. Fahrzeuginsassen-Rückhaltesystem mit einem Gassack (10) und einem Gasgenerator (12; 26) zum Befüllen des Gassacks (10), **dadurch gekennzeichnet, daß** die vom Gasgenerator (12; 26) erzeugten Druckgase mit einem Dichtmittel (16; 34) versehen sind und das Dichtmittel (16; 34) während des Aufblasvorgangs des Gassacks (10) auf dessen Innenseite verteilt wird.

2. Fahrzeuginsassen-Rückhaltesystem nach Anspruch 1, **dadurch gekennzeichnet, daß** das Rückhaltesystem weiterhin einen das Dichtmittel (16) enthaltenden Speicherbehälter (14; 20; 28) aufweist, der Speicherbehälter (14; 20; 28) durch vom Gasgenerator (12; 26) erzeugte Druckgase beaufschlagbar ist und eine Austrittsöffnung des Speicherbehälters (14; 20; 28) in Strömungsverbindung mit dem Gassack (10) steht, so daß das Dichtmittel (16) während des Aufblasvorgangs des Gassacks (10) vom Speicherbehälter zum Gassack befördert und auf dessen Innenseite (10) verteilt wird.

3. Fahrzeuginsassen-Rückhaltesystem nach Anspruch 2, **dadurch gekennzeichnet, daß** der Speicherbehälter (14) in einer Verbindungsleitung (18) zwischen Gasgenerator (12) und Gassack (10) angeordnet ist.

4. Fahrzeuginsassen-Rückhaltesystem nach Anspruch 2 oder 3, **dadurch gekennzeichnet, daß** der Speicherbehälter (20) im Gassack (10) angeordnet ist.

5. Fahrzeuginsassen-Rückhaltesystem nach einem der Ansprüche 2 bis 4, **dadurch gekennzeichnet, daß** an einer Einmündungsöffnung in den Gassack (10), an der das vom Speicherbehälter (20; 28) zum Gassack (10) beförderte Dichtmittel (16) in den Gassack (10) eintritt, eine mit mehreren Abströmöffnungen versehene Verteilerdüse (22; 30) vorgesehen ist.

6. Fahrzeuginsassen-Rückhaltesystem nach Anspruch 2. 4 oder 5, **dadurch gekennzeichnet, daß** Gasgenerator (26) und Speicherbehälter (28) in einem gemeinsamen Gehäuse (24) integriert sind.

7. Fahrzeuginsassen-Rückhaltesystem nach einem der Ansprüche 2 bis 6, **dadurch gekennzeichnet, daß** in dem Pfad der vom Gasgenerator (26) erzeugten und den Speicherbehälter (28) beaufschlagenden Druckgase zwischen Gasgenerator (26) und Speicherbehälter (28) eine Berstmembran (31) angeordnet ist.

8. Fahrzeuginsassen-Rückhaltesystem nach einem der Ansprüche 2 bis 7, **dadurch gekennzeichnet, daß** die Strömungsverbindung vom Speicherbehälter (28) zum Gassack (10) im Ruhezustand durch eine Berstmembran (32) unterbrochen ist.

9. Fahrzeuginsassen-Rückhaltesystem nach einem der Ansprüche 2 bis 6 oder nach Anspruch 8, **dadurch gekennzeichnet, daß** in dem Pfad der vom Gasgenerator erzeugten und den Speicherbehälter beaufschlagenden Druckgase zwischen Gasgenerator und Speicherbehälter eine mit einem Ventil versehene Trennwand angeordnet ist.

10. Fahrzeuginsassen-Rückhaltesystem nach einem der Ansprüche 2 bis 7 oder nach Anspruch 9, **dadurch gekennzeichnet, daß** in der Strömungsverbindung vom Speicherbehälter zum Gassack eine mit einem Ventil versehene Trennwand angeordnet ist.

## Claims

1. A vehicle occupant restraint system comprising a gas bag (10) and a gas generator (12; 26) for filling the gas bag (10), characterized in that the compressed gases which are produced by the gas generator (12; 26) are provided with a sealing compound (16) and that the sealing compound (16) is distributed on the inner side of the gas bag (10) during the inflation process thereof.

2. The vehicle occupant restraint system according to Claim 1, characterized in that the restraint system additionally has a storage vessel (14; 20; 28) containing the sealing compound (16), the storage vessel (14; 20; 28) is able to be acted upon by compressed gases produced by the gas generator (12; 26) and an outflow opening of the storage vessel (14; 20; 28) is in flow connection with the gas bag (10), so that the sealing compound (16) is conveyed from the storage vessel to the gas bag during the inflation process of the gas bag (10) and is distributed on its inner side.

3. The vehicle occupant restraint system according to Claim 2, characterized in that the storage vessel (14) is arranged in a connecting line (18) between the gas generator (12) and the gas bag (10).

4. The vehicle occupant restraint system according to Claim 2 or 3, characterized in that the storage vessel (20) is arranged within the gas bag (10).

5. The vehicle occupant restraint system according to any of claims 2 to 4, characterized in that a distributor nozzle (22; 30) provided with a plurality of outflow openings, is provided at an orifice opening into the gas bag (10), at which opening the sealing compound (16) conveyed from the storage vessel (20; 28) to the gas bag (10) enters into the gas bag (10).

6. The vehicle occupant restraint system according to Claim 2, 4 or 5, characterized in that the gas generator (26) and the storage vessel (28) are integrated in a common housing (24).

7. The vehicle occupant restraint system according to any of the claims 2 to 6, characterized in that a bursting diaphragm (31) is arranged between gas generator (26) and storage vessel (28) in the path of the compressed gases produced by the gas generator (26) and acting upon the storage vessel (28).

8. The vehicle occupant restraint system according to any of the claims 2 to 7, characterized in that the flow connection from the storage vessel (28) to the gas bag (10) in the inactive state is interrupted by a bursting diaphragm (32).

9. The vehicle occupant restraint system according to any of Claims 2 to 6 or Claim 8, characterized in that a dividing wall, provided with a valve, is arranged between gas generator and storage vessel in the path of the compresses gases produced by the gas generator and acting upon the storage vessel.

10. The vehicle occupant restraint system according to any of Claims 2 to 7 or Claim 9, characterized in that a dividing wall, provided with a valve, is arranged in the flow connection from the storage vessel to the gas bag.

## Revendications

1. Système de retenue d'occupant de véhicule automobile avec un coussin à air (10) et un générateur de gaz (12; 26) pour remplissage du coussin à air (10), caractérisé en ce que les gaz sous pression engendrés par le générateur de gaz (12; 26) sont pourvus d'un agent d'étanchéité (16; 34) et que l'agent d'étanchéité (16; 34) est réparti sur la face intérieure du coussin à air (10) lors du gonflage de ce dernier.

2. Système de retenue d'occupant de véhicule automobile selon la revendication 1, caractérisé en ce que le système de retenue présente en outre un réservoir (14; 20; 28) contenant l'agent d'étanchéité (16), que le réservoir (14; 20; 28) est sollicité par les gaz sous pression engendrés par le générateur de gaz (12; 26) et qu'un orifice de sortie du réservoir (14; 20; 28) est en liaison d'écoulement avec le coussin à air (10), de sorte que, lors du gonflage du coussin d'air, l'agent d'étanchéité (16) est transporté du réservoir au coussin à air et est réparti sur la face intérieure de ce dernier.

3. Système de retenue d'occupant de véhicule automobile selon la revendication 2, caractérisé en ce que le réservoir (14) est agencé dans une conduite de liaison (18) entre le générateur de gaz (12) et le coussin d'air (10).

4. Système de retenue d'occupant de véhicule automobile selon l'une des revendications 2 ou 3, caractérisé en ce que le réservoir (20) est agencé dans le coussin d'air (10).

5. Système de retenue d'occupant de véhicule automobile selon l'une des revendications 2 à 4, caractérisé en ce qu'une buse de distribution (22; 30) munie de plusieurs orifices d'écoulement est prévue au niveau de l'orifice d'entrée dans le coussin d'air (10), au niveau de laquelle entre l'agent d'étanchéité (16) transporté du réservoir (20; 28) au coussin d'air (10).

6. Système de retenue d'occupant de véhicule automobile selon l'une des revendications 2, 4 ou 5, caractérisé en ce que le générateur de gaz (26) et le réservoir (28) sont intégrés dans un boîtier commun (24).

7. Système de retenue d'occupant de véhicule automobile selon l'une des revendications 2 à 6, caractérisé en ce qu'une membrane de rupture (31) est agencée entre le générateur de gaz (26) et le réservoir (28) sur le trajet des gaz sous pression engendrés par le générateur de gaz (26) et sollicitant le réservoir (28).

8. Système de retenue d'occupant de véhicule automobile selon l'une des revendications 2 à 7, caractérisé en ce que la liaison d'écoulement du réservoir (28) au coussin à air (10) est interrompue au repos par une membrane de rupture (32).

9. Système de retenue d'occupant de véhicule automobile selon l'une des revendications 2 à 6 ou selon la revendication 8, caractérisé en ce qu'une paroi de séparation munie d'une valve est agencée entre le générateur de gaz et le réservoir sur le trajet des gaz sous pression engendrés par le générateur de gaz et sollicitant le réservoir.

10. Système de retenue d'occupant de véhicule automobile selon l'une des revendications 2 à 7 ou selon la revendication 9, caractérisé en ce qu'une paroi de séparation munie d'une valve est agencée dans la liaison d'écoulement du réservoir au coussin à air.
